# EUROPEAN PATENT APPLICATION

(11) **EP 4 247 085 A1**
(43) Date of publication of application: **20.09.2023**
(21) Application number: 21902711.7
(22) Date of filing: 10.12.2021
(51) Int. Cl.: H04W 72/04, H04W 74/00

(54) **METHOD FOR INDICATING CHANNEL DIVISION INFORMATION, AND COMMUNICATION APPARATUS**

(30) Priority: 11.12.2020 CN 202011447831
(71) Applicant: Huawei Technologies Co., Ltd., Shenzhen, Guangdong 518129 (CN)
(72) Inventor: YU, Jian, Shenzhen, Guangdong 518129 (CN); PAN, Jinzhe, Shenzhen, Guangdong 518129 (CN); GUO, Yuchen, Shenzhen, Guangdong 518129 (CN); HU, Mengshi, Shenzhen, Guangdong 518129 (CN)
(74) Representative: Grünecker Patent- und Rechtsanwälte PartG mbB
(86) International application number: PCT/CN2021/136972
(87) International publication number: WO 2022/122006

(57) **Abstract**

This application discloses a channel division information indication method and a communication apparatus. The method includes: An access point generates a trigger frame, where the trigger frame includes a first user information field, the first user information field is used to allocate a random access-resource unit RA-RU to an unassociated extremely high throughput station EHT STA, and the trigger frame carries indication information that indicates channel division information; and the access point sends the trigger frame to a station. It can be learned that, the unassociated EHT STA can identify a channel division status based on the method described in this application.

## Description

This application claims priority to Chinese Patent Application No. 2020114478315, filed with the China National Intellectual Property Administration on December 11, 2020 and entitled "CHANNEL DIVISION INFORMATION INDICATION METHOD AND COMMUNICATION APPARATUS", which is incorporated herein by reference in its entirety.

### TECHNICAL FIELD

This application relates to the field of communication technologies, and in particular, to a channel division information indication method and a communication apparatus.

### BACKGROUND

A wireless local area network (wireless local area network, WLAN) has been developed for many generations, including the 802.11a/b/g, the 802.11n, the 802.11ac, the 802.11ax, and the 802.11be under discussion. The 802.11n standard is referred to as high throughput (high throughput, HT), the 802.11ac standard is referred to as very high throughput (very high throughput, VHT), the 802.11ax standard is referred to as high efficiency (high efficiency, HE), and the 802.11be standard is referred to as extremely high throughput (extremely high throughput, EHT).

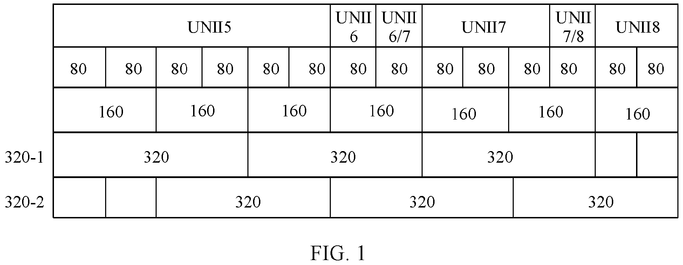

A 6 GHz frequency band is added to the 802. 1The under discussion, and a maximum contiguous bandwidth is increased from 160 MHz in the 11 ax to 320 MHz. In this way, system throughput (throughput) is further increased. FIG. 1 shows channel division of a 320 MHz bandwidth mode in the 6 GHz frequency band. The 802.11be defines that a 320 MHz bandwidth channel includes two contiguous 160 MHz bandwidth channels, and a 160 MHz bandwidth channel includes two contiguous 80 MHz bandwidth channels. There are two 320 MHz channel division manners: 320-1 with a PPDU channel center frequency of 31/95/159 and 320-2 with a PPDU channel center frequency of 63/127/191. As shown in FIG. 1, when the 320 MHz channel division manner is 320-1, the first 320 MHz includes the first 160 MHz and the second 160 MHz, the second 320 MHz includes the third 160 MHz and the fourth 160 MHz, and the third 320 MHz includes the fifth 160 MHz and the sixth 160 MHz. When the 320 MHz channel division manner is 320-2, the first 320 MHz includes the second 160 MHz and the third 160 MHz, the second 320 MHz includes the fourth 160 MHz and the fifth 160 MHz, and the third 320 MHz includes the sixth 160 MHz and the seventh 160 MHz.

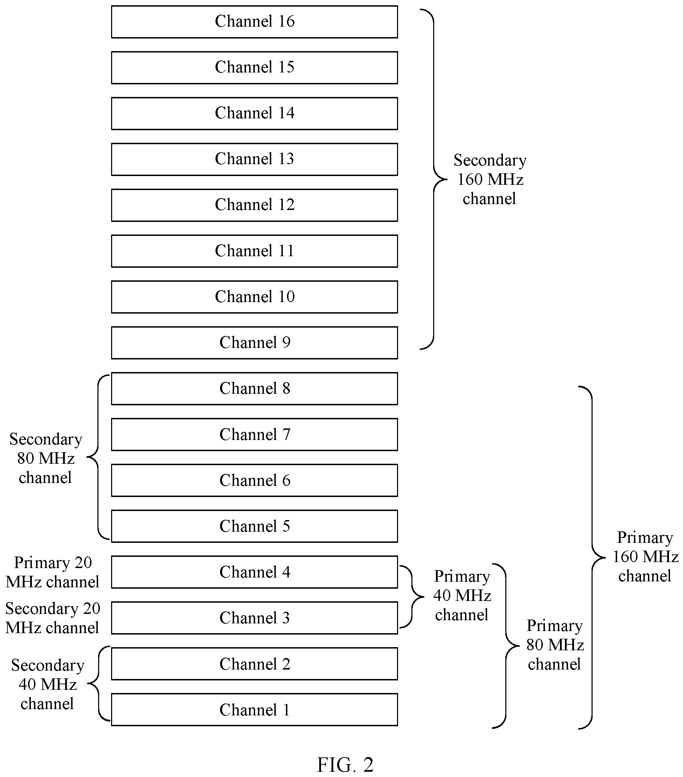

In a channel, a primary 20 MHz channel (or a primary channel, a primary 20 MHz, a P20 for short), a secondary 20 MHz channel (secondary 20 MHz, S20), a primary/secondary 40 MHz channel, a primary/secondary 80 MHz channel, and a primary/secondary 160 MHz channel are further defined. The primary 20 MHz channel may be any one in an entire bandwidth, and there is no fixed relationship. For example, a bandwidth is 320 MHz. As shown in FIG. 2, a 40 MHz channel including a P20 channel is referred to as a P40 channel. An 80 MHz channel including a P20 channel is referred to as a P80 channel. A 160 MHz channel including a P20 channel is referred to as a P160 channel. A secondary 20 MHz channel is a 20 MHz channel other than the primary 20 MHz channel in the primary 40 MHz channel. A secondary 40 MHz channel is a 40 MHz channel other than the primary 40 MHz channel in the primary 80 MHz channel. A secondary 80 MHz channel is an 80 MHz channel other than the primary 80 MHz channel in the primary 160 MHz channel. A secondary 160 MHz channel is a 160 MHz channel other than the primary 160 MHz channel in a 320 MHz channel.

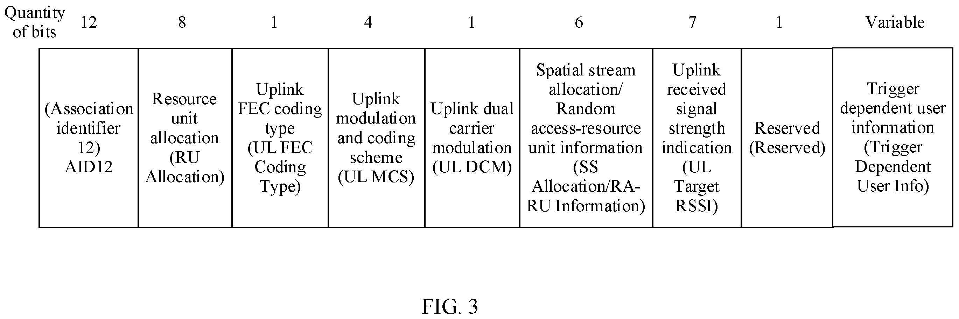

A WLAN device, an access point (access point, AP), and a station (station, STA) operate in an unlicensed spectrum, and obtain, by contending for a channel, an opportunity of transmitting a physical layer protocol data unit (PHY protocol data unit, PPDU). The 11 ax proposes an uplink orthogonal frequency division multiple access-based random access (uplink OFDMA-based random access, UORA) mechanism in which the STA performs random access transmission by using a random access-resource unit (random access-resource unit, RA-RU) to obtain the opportunity of transmitting the PPDU. The AP sends a trigger frame to one or more STAs, to allocate the RA-RU to the one or more STAs by using the trigger frame. As shown in FIG. 3, a user information field in the trigger frame includes an AID12 subfield and an RU allocation (RU allocation) subfield. B26-B31 of the user information field in the trigger frame is a spatial stream allocation/RA-RU information (spatial stream allocation/random access-resource unit information) subfield. When a value of the AID 12 subfield in the user information field is 0 or 2045, it indicates that B26-B31 of the user information field is a RA-RU information (random access-resource unit information) subfield. When the value of the AID 12 subfield in the user information field is not 0 or 2045, B26-B31 of the user information field is a spatial stream allocation (spatial stream allocation) subfield.

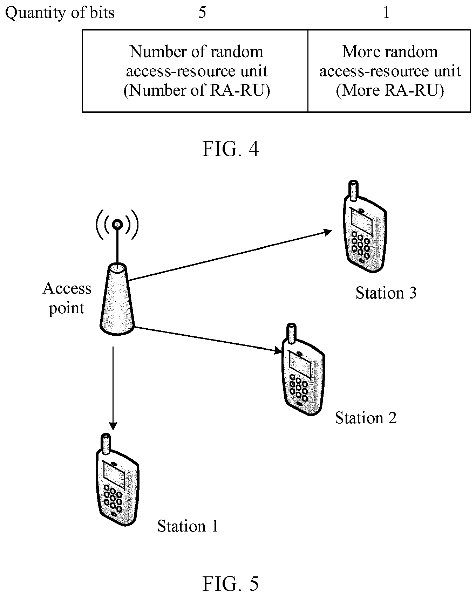

When reading that the AID 12 subfield is 0 or 2045, an associated STA or an unassociated STA performs random access transmission based on the RU allocation subfield and an RU indicated in RA-RU information. The RU allocation subfield indicates a size and a location of the first RA-RU allocated to the STA. A structure of the RA-RU information subfield is shown in FIG. 4. A number of random access-resource unit (number Of RA-RU) subfield indicates a quantity of allocated contiguous RA-RUs. A value of the number of random access-resource unit subfield is equal to the quantity of contiguous RA-RUs minus 1. An indication method of the RU allocation subfield is as follows: When a bandwidth is 160 MHz, the first bit in eight bits indicates that an indicated RA-RU is located in a primary 80 MHz or a secondary 80 MHz, and then the other seven bits indicate the specific RA-RU located in the 80 MHz. When the bandwidth is 20 MHz, 40 MHz, or 80 MHz, the first bit in the eight bits indicates that the indicated RA-RU is located in the primary 80 MHz, and then the other seven bits indicate the specific RA-RU located in the 80 MHz.

Generally, channel division information is carried in a beacon frame (beacon frame) or a probe response frame (probe response frame). The STA can determine, based on the channel division information, a location of the 80 MHz indicated by the first bit in the RU allocation subfield. However, an unassociated EHT STA cannot receive the beacon frame or the probe response frame. Consequently, the unassociated EHT STA cannot identify a channel division status; cannot determine, based on the channel division status, a 320 MHz bandwidth in which the 80 MHz indicated by the first bit in the RU allocation subfield is located; cannot determine the location of the 80 MHz indicated by the first bit in the RU allocation subfield; and cannot determine the RA-RU allocated by the AP.

### SUMMARY

This application provides a channel division information indication method and a communication apparatus, to help an unassociated EHT STA identify a channel division status.

According to a first aspect, this application provides a channel division information indication method. The method includes: An access point generates a trigger frame, where the trigger frame includes a first user information field, the first user information field is used to allocate a random access-resource unit RA-RU to an unassociated extremely high-throughput station EHT STA, and the trigger frame carries indication information that indicates channel division information; and the access point sends the trigger frame to a station. It can be learned that, the unassociated EHT STA can identify a channel division status based on the method described in the first aspect.

According to a second aspect, this application provides a channel division information indication method. The method includes: A station receives a trigger frame sent by an access point, where the trigger frame includes a first user information field, the first user information field is used to allocate a random access-resource unit RA-RU to an unassociated extremely high-throughput station EHT STA, and the trigger frame carries indication information that indicates channel division information; and the station reads the channel division information in the trigger frame. It can be learned that, the unassociated EHT STA can identify a channel division status based on the method described in the second aspect.

In a possible implementation of the second aspect, the first user information field further includes a resource unit RU allocation subfield, and the RU allocation subfield is used to allocate the RA-RU. The station may further read a location of the RA-RU based on the channel division information and the RU allocation subfield; and perform random access transmission based on the location of the RA-RU. Based on this possible implementation, the station can accurately determine the location of the RA-RU, and perform random access transmission based on the location of the RA-RU.

In a possible implementation of the first aspect or the second aspect, the first user information field includes a first association identifier AID 12 subfield, a value of the first AID 12 subfield is a first value, the first value is a value in 2008-2044 or the first value is a value that is of an AID 12 not allocated to an associated STA and that is in 1-2007, and the first AID12 subfield indicates that the first user information field is used to allocate the RA-RU to the unassociated EHT STA. Based on this possible implementation, the reserved value of the AID12 subfield in the 802.11 ax indicates that the user information field is used to allocate the RA-RU to the unassociated EHT STA, so that the RA-RU can be allocated to the unassociated EHT STA more flexibly.

In a possible implementation of the first aspect or the second aspect, bits of the indication information are located in the first user information field. If the bits of the indication information are located in a common information field, even if there is no unassociated EHT STA that needs to perform random access, the common information field keeps carrying the indication information. The bits of the indication information are located in the first user information field, so that the indication information can be carried in the trigger frame only when there is an unassociated EHT STA that needs to perform random access. In this way, the indication information is carried more flexibly, and the common information field can carry more other information.

In a possible implementation of the first aspect or the second aspect, the trigger frame further includes a second user information field, the second user information field includes a second modulation and coding scheme MCS subfield, the second MCS subfield includes four bits, and the second user information field indicates information about a non-RA-RU STA. The first user information field includes a first MCS subfield, and a length of the first MCS subfield is less than four bits. Based on this possible implementation, the bits of the indication information can be carried in the first user information field without changing a total quantity of bits in the first user information field.

In a possible implementation of the first aspect or the second aspect, the trigger frame further includes a second user information field, the second user information field includes a high efficiency HE/EHT format subfield, and the second user information field indicates information about a non-RA-RU STA. A bit location of the indication information in the first user information field is the same as a bit location of the HE/EHT format subfield in the second user information field. Based on this possible implementation, the bits of the indication information can be carried in the first user information field without changing a total quantity of bits in the first user information field.

In a possible implementation of the first aspect or the second aspect, the first user information field includes a trigger dependent user information subfield, and the bits of the indication information are located in the trigger dependent user information field. Based on this possible implementation, the bits of the indication information can be carried in the first user information field without changing a total quantity of bits in the first user information field.

In a possible implementation of the first aspect or the second aspect, the trigger frame further includes a third user information field, the third user information field includes a second AID 12 field and a first field, a value of the second AID 12 is a second value, the second AID 12 field indicates that bits of the indication information are located in the first field, the second value is a value in 2008-2044 or the second value is a value that is of the AID 12 not allocated to the associated STA and that is in 1-2007, and the second value is different from the first value. In this possible implementation, a special user information field is used to carry the bits of the indication information. In this way, design of the first user information field for the unassociated EHT STA does not need to be complex, and interpretation of the first user information field by a receive end is simplified.

In a possible implementation of the first aspect or the second aspect, the channel division information includes a 320 megahertz MHz channel division manner, the first user information field further includes a resource unit allocation subfield and a low/high 160 MHz subfield, the low/high 160 MHz subfield indicates that the RA-RU is located in a low 160 MHz or a high 160 MHz, and a first bit of the resource unit allocation subfield indicates a low 80 MHz or a high 80 MHz of the 160 MHz indicated by the low/high 160 MHz subfield. In this manner, the indication information does not need to indicate a location of a primary 80 MHz, and indication signaling overheads are reduced.

In a possible implementation of the first aspect or the second aspect, the first user information field includes a first association identifier AID 12 subfield, a value of the first AID 12 subfield is 2045, and the first AID 12 subfield indicates that the first user information field is used to allocate the RA-RU to the unassociated EHT STA. Based on this possible implementation, a user information field does not need to be additionally designed for UORA of the EHT STA.

In a possible implementation of the first aspect or the second aspect, the trigger frame further includes a common information field, the first user information field includes a trigger dependent user information subfield, the indication information includes a plurality of bits, and the bits of the indication information are located in one or more of the following locations: the common information field, a location of a reserved bit in the first user information field, or a location of a reserved bit in the trigger dependent user information subfield.

In a possible implementation of the first aspect or the second aspect, the trigger frame further includes a third user information field, the third user information field includes a second AID 12 field and a first field, a value of the second AID12 is a second value, the second AID12 field indicates that the bits of the indication information are located in the first field, and the second value is a value in 2008-2044 or the second value is a value that is of an AID12 not allocated to an associated STA and that is in 1-2007. In this possible implementation, a special user information field is used to carry the bits of the indication information. In this way, design of the first user information field for the unassociated EHT STA does not need to be complex, and interpretation of the first user information field by a receive end is simplified.

In a possible implementation of the first aspect or the second aspect, the trigger frame further includes a common information field, and bits of the indication information are located in the common information field. The bits of the indication information are carried in the common information field. In this way, the design of the first user information field for the unassociated EHT STA does not need to be complex, and interpretation of the first user information field by the receive end is simplified.

In a possible implementation of the first aspect or the second aspect, the channel division information includes one or more pieces of the following information: the 320 megahertz MHz channel division manner and a location of a primary 80 MHz.

According to a third aspect, this application provides a communication apparatus. The apparatus may be an access point, an apparatus in an access point, or an apparatus that can be used together with an access point. The communication apparatus may alternatively be a chip system. The communication apparatus may perform the method according to the first aspect. A function of the communication apparatus may be implemented through hardware, or may be implemented through hardware executing corresponding software. The hardware or the software includes one or more units corresponding to the foregoing function. The unit may be software and/or hardware. For an operation performed by the communication apparatus and beneficial effect thereof, refer to the method and beneficial effect in the first aspect. Details are not repeatedly described.

According to a fourth aspect, this application provides a communication apparatus. The apparatus may be a station, an apparatus in a station, or an apparatus that can be used together with a station. The communication apparatus may alternatively be a chip system. The communication apparatus may perform the method according to the second aspect. A function of the communication apparatus may be implemented through hardware, or may be implemented through hardware executing corresponding software. The hardware or the software includes one or more units corresponding to the foregoing function. The unit may be software and/or hardware. For an operation performed by the communication apparatus and beneficial effect thereof, refer to the method and beneficial effect in the second aspect. Details are not repeatedly described.

According to a fifth aspect, this application provides a communication apparatus. The communication apparatus includes a processor; and when the processor invokes a computer program in a memory, the method according to the first aspect or the second aspect is performed.

According to a sixth aspect, this application provides a communication apparatus. The communication apparatus includes a processor and a memory. The memory is configured to store computer-executable instructions; and the processor is configured to execute the computer-executable instructions stored in the memory, so that the communication apparatus performs the method according to the first aspect or the second aspect.

According to a seventh aspect, this application provides a communication apparatus. The communication apparatus includes a processor, a memory, and a transceiver. The transceiver is configured to receive a signal or send a signal. The memory is configured to store program code. The processor is configured to invoke the program code from the memory to perform the method according to the first aspect or the second aspect.

According to an eighth aspect, this application provides a communication apparatus. The communication apparatus includes a processor and an interface circuit. The interface circuit is configured to receive code instructions and transmit the code instructions to the processor, and the processor runs the code instructions to perform the method according to the first aspect or the second aspect.

According to a ninth aspect, an embodiment of this application provides a system. The system includes the communication apparatus provided in the third aspect or the fourth aspect.

According to a tenth aspect, this application provides a computer-readable storage medium. The computer-readable storage medium is configured to store instructions; and when the instructions are executed, the method according to the first aspect or the second aspect is implemented.

According to an eleventh aspect, an embodiment of this application provides a computer program or a computer program product including code or instructions. When the code or the instructions is/are run on a computer, the computer is enabled to perform the method according to the first aspect or the second aspect.

### BRIEF DESCRIPTION OF DRAWINGS

FIG. 1 is a schematic diagram of a structure of channel division in the conventional technology;
FIG. 2 is another schematic diagram of channel division in the conventional technology;
FIG. 3 is a schematic diagram of a structure of a user information field in a trigger frame in the conventional technology;
FIG. 4 is a schematic diagram of a structure of a random access-resource unit information subfield in a user information field in a trigger frame in the conventional technology;
FIG. 5 is a schematic diagram of a system architecture according to an embodiment of this application;
FIG. 6 is a schematic flowchart of a channel division information indication method according to an embodiment of this application;
FIG. 7 is a schematic diagram of a relative location relationship between a primary 80 MHz and an 80 MHz in which a trigger frame is located according to an embodiment of this application;
FIG. 8 is a schematic diagram of a structure of a trigger frame according to an embodiment of this application;
FIG. 9 is another schematic diagram of a structure of a trigger frame according to an embodiment of this application;
FIG. 10 is a schematic diagram of a structure of a trigger dependent user information subfield according to an embodiment of this application;
FIG. 11 is still another schematic diagram of a structure of a trigger frame according to an embodiment of this application;
FIG. 12 is a schematic diagram of a structure of a common information field according to an embodiment of this application;
FIG. 13 is yet another schematic diagram of a structure of a trigger frame according to an embodiment of this application;
FIG. 14 is still yet another schematic diagram of a structure of a trigger frame according to an embodiment of this application;
FIG. 15 is a schematic diagram of a structure of a communication apparatus according to an embodiment of this application; and
FIG. 16 is a schematic diagram of a structure of another communication apparatus according to an embodiment of this application.

### DESCRIPTION OF EMBODIMENTS

The following further describes specific embodiments of this application in detail with reference to the accompanying drawings.

In the specification, claims, and accompanying drawings of this application, terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular characteristic, structure, or feature described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, and "at least two (items)" means two or three or more. The term "and/or" is used to describe an association relationship between associated objects and indicates that three relationships may exist. For example, "A and/or B" may indicate the following three cases: Only A exists, only B exists, and both A and B exist, where A and B may be singular or plural. The character "/" usually indicates an "or" relationship between the associated objects. In addition, "at least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Embodiments of this application provide a channel division information indication method and a communication apparatus. The method provided in embodiments of this application is applied to a wireless communication system. The wireless communication system may be a wireless local area network (wireless local area network, WLAN) or a cellular network, and the method may be implemented by a communication device in the wireless communication system or a chip or a processor in the communication device. In the wireless local area network, the communication device supports use of the 802.11be or a standard after the 802.11be.

To better understand embodiments of this application, the following first describes a system architecture in embodiments of this application.

FIG. 5 is a schematic diagram of a system architecture according to an embodiment of this application. As shown in FIG. 5, the system architecture includes an access point (access point, AP) and one or more stations. The station shown in FIG. 5 may be an unassociated extremely high throughput station (extremely high throughput station, EHT STA). The unassociated EHT STA is an EHT STA that does not access a cell in which the access point is located. The EHT STA is a station that supports the 802.11be standard. FIG. 5 is described by using an example in which the system architecture includes one access point and three stations. Certainly, the system architecture may further include more access points and stations. Alternatively, the system architecture may include only two stations.

The access point may be an access point used by a terminal device (for example, a mobile phone) to access a wired (or wireless) network, and is mainly deployed at home, in a building, and in a park. A typical coverage radius is tens of meters to a hundred meters. Certainly, the access point may alternatively be deployed outdoors. The access point is equivalent to a bridge connecting the wired network and the wireless network. A main function of the access point is to connect wireless network clients, and then connect the wireless network to the Ethernet. Specifically, the access point may be a terminal device (for example, a mobile phone) or a network device (for example, a router) with a wireless fidelity (wireless fidelity, Wi-Fi) chip. The access point may be a device that supports the 802.11be standard or a standard later than the 802.11be.

The station may be a wireless communication chip, a wireless sensor, or a wireless communication terminal. For example, the station may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, a computer supporting a Wi-Fi communication function, or the like.

For example, the access point and the station may be devices used in the Internet of vehicles, Internet of things nodes, sensors, or the like in the Internet of things, smart cameras, smart remote controls, smart water or electricity meters, or the like in smart home, sensors in smart city, and the like.

The following further describes the channel division information indication method and the communication apparatus that are provided in this application.

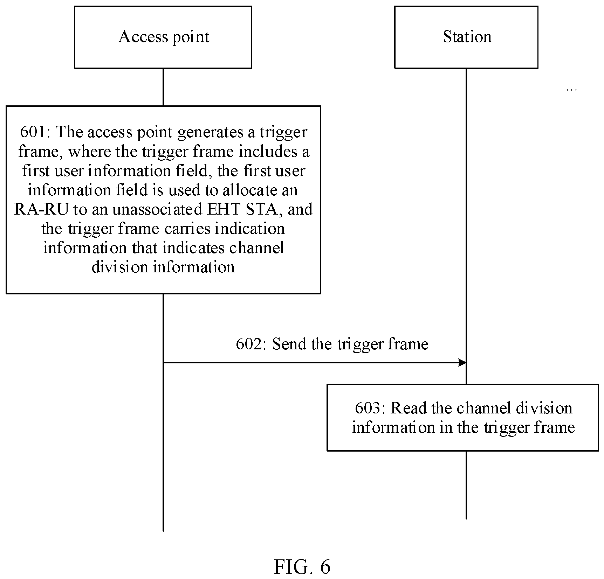

FIG. 6 is a schematic flowchart of a channel division information indication method according to an embodiment of this application. As shown in FIG. 6, the channel division information indication method includes the following step 601 to step 603. The method shown in FIG. 6 may be performed by an access point and a station. Alternatively, the method shown in FIG. 6 may be performed by a chip in the access point and a chip in the station. In FIG. 6, an example in which the method is performed by the access point and the station is used for description.

601: The access point generates a trigger frame, where the trigger frame includes a first user information field, the first user information field is used to allocate an RA-RU to an unassociated EHT STA, and the trigger frame carries indication information that indicates channel division information.

The trigger frame may include one or more first user information fields. Each first user information field is used to allocate one RA-RU or a plurality of contiguous RA-RUs to the unassociated EHT STA. The RA-RU is used by the unassociated EHT STA to perform random access transmission, to obtain an opportunity of transmitting a PPDU.

The first user information field may include an RU allocation (RU allocation) subfield. The first user information field allocates the first RA-RU to the unassociated EHT STA by using the RU allocation subfield.

When a bandwidth is 160 MHz, a first bit of the RU allocation subfield indicates that the RA-RU is located in an 80 MHz (for example, a primary 80 MHz, a secondary 80 MHz, or a low-frequency 80 MHz or a high-frequency 80 MHz of an absolute frequency). Other seven bits indicate a location of the first allocated RA-RU in the 80 MHz indicated by the first bit, and optionally, may further indicate a size of the first RA-RU.

In a possible implementation, when the bandwidth is 320 MHz, the first user information field further includes a primary/secondary 160 MHz subfield. The primary/secondary 160 MHz subfield indicates that the RA-RU is located in a primary 160 MHz or a secondary 160 MHz. If the primary/secondary 160 MHz subfield indicates the primary 160 MHz, the first bit of the RU allocation subfield indicates that the RA-RU is located in a primary 80 MHz or a secondary 80 MHz of the primary 160 MHz. If the primary/secondary 160 MHz subfield indicates the secondary 160 MHz, the first bit of the RU allocation subfield indicates that the RA-RU is located in a high-frequency 80 MHz or a low-frequency 80 MHz in the secondary 160 MHz.

In another possible implementation, when the bandwidth is 320 MHz, the first user information field further includes a low/high 160 MHz subfield. The low/high 160 MHz subfield indicates that the RA-RU is located in a high-frequency 160 MHz or a low-frequency 160 MHz. The first bit of the RU allocation subfield indicates that the RA-RU is located in a high-frequency 80 MHz or a low-frequency 80 MHz in the 160 MHz indicated by the low/high 160 MHz subfield.

The first user information field may further include an RA-RU information (random access-resource unit information) subfield. As shown in FIG. 4, the RA-RU information subfield includes a number of random access-resource unit (number of RA-RU) subfield. The number of random access-resource unit (number of RA-RU) subfield indicates a quantity of allocated contiguous RA-RUs. A value of the number of random access-resource unit subfield is equal to the quantity of allocated contiguous RA-RUs minus 1. After determining a location of the first RA-RU in the allocated contiguous RA-RUs, the STA can determine locations of other allocated RA-RUs based on the location of the first RA-RU and the quantity of allocated contiguous RA-RUs.

Optionally, the unassociated EHT STA in this specification of this application may be replaced with an unassociated EHT+STA. The EHT+STA is a STA that supports a standard later than the 802.11be. A field name in this specification of this application may be alternatively replaced with another field name.

602: The access point sends the trigger frame to the station.

603: The station reads the channel division information in the trigger frame.

In this embodiment of this application, after receiving the trigger frame sent by the access point, the station determines the channel division information based on the indication information in the trigger frame. The station in step 603 is an unassociated EHT STA.

In a possible implementation, the station may further read a location of the RA-RU based on the read channel division information and the RU allocation subfield, and perform random access transmission based on the location of the RA-RU. The station can determine a channel division status based on the channel division information, and can determine, based on the channel division status, a location of the 80 MHz in which the RA-RU allocated by the RU allocation subfield is located, to determine the location of the RA-RU based on the location of the 80 MHz in which the RA-RU is located. Based on this possible implementation, the station can accurately determine the location of the RA-RU, and perform random access transmission based on the location of the RA-RU.

It can be learned that, the unassociated EHT STA can identify the channel division status based on the method described in FIG. 6.

In a possible implementation, the channel division information includes one or more of the following information: a 320 MHz channel division manner and a location of a primary 80 MHz. In other words, the indication information may indicate the 320 MHz channel division manner, or indicate the location of the primary 80 MHz, or indicate the 320 MHz channel division manner and the location of the primary 80 MHz.

The 320 MHz channel division manner includes 320-1 with a PPDU channel center frequency of 31/95/159 and 320-2 with a PPDU channel center frequency of 63/127/191. For descriptions of 320-1 and 320-2, refer to descriptions in the background. Details are not described herein again. The 320 MHz channel division manner may be indicated by using one bit. For example, when the bit is 1, it indicates 320-1; or when the bit is 0, it indicates 320-2. Alternatively, when the bit is 0, it indicates 320-1; or when the bit is 1, it indicates 320-2.

The location of the primary 80 MHz may be indicated by using two or more bits. For example, the location of the primary 80 MHz is indicated by using two bits. When the bits are 00, it indicates that the primary 80 MHz is the first one of four 80 MHz in ascending order frequencies in a 320 MHz; or when the bits are 01, it indicates that the primary 80 MHz is the second one of four 80 MHz in ascending order of frequencies in a 320 MHz; or when the bits are 10, it indicates that the primary 80 MHz is the third one of four 80 MHz in ascending order of frequencies in a 320 MHz; or when the bits are 11, it indicates that the primary 80 MHz is the fourth one of four 80 MHz in ascending order of frequencies in a 320 MHz.

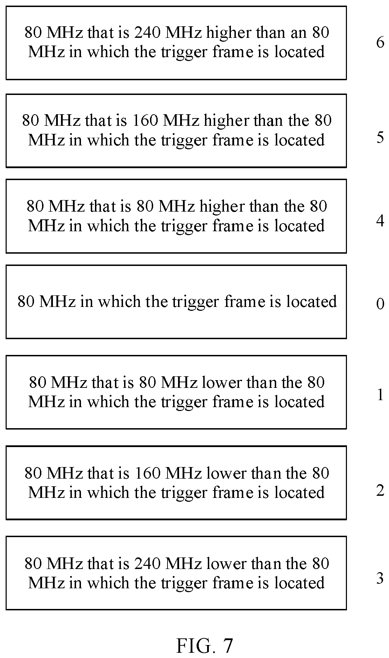

For another example, the location of the primary 80 MHz is indicated by using three bits. A relative indication method may be used to indicate the location of the primary 80 MHz. As shown in FIG. 7, there are seven relative location relationships between the primary 80 MHz and the 80 MHz in which the trigger frame is located. When the bits are 110, it indicates that the primary 80 MHz is an 80 MHz that is 240 MHz higher than the 80 MHz in which the trigger frame is located; or when the bits are 101, it indicates that the primary 80 MHz is an 80 MHz that is 160 MHz higher than the 80 MHz in which the trigger frame is located; or when the bits are 100, it indicates that the primary 80 MHz is an 80 MHz that is 80 MHz higher than the 80 MHz in which the trigger frame is located; or when the bits are 000, it indicates that the primary 80 MHz is the 80 MHz in which the trigger frame is located; or when the bits are 001, it indicates that the primary 80 MHz is an 80 MHz that is 80 MHz lower than the 80 MHz in which the trigger frame is located; or when the bits are 010, it indicates that the primary 80 MHz is an 80 MHz that is 160 MHz lower than the 80 MHz in which the trigger frame is located; or when the bits are 011, it indicates that the primary 80 MHz is an 80 MHz that is 240 MHz lower than the 80 MHz in which the trigger frame is located.

The station can determine, based on the 320 MHz channel division manner, a 320 MHz in which the RA-RU is located, so that the station can determine the location of the 80 MHz in which the RA-RU is located from the 320 MHz, and further determine the location of the RA-RU based on the location of the 80 MHz in which the RA-RU is located.

Optionally, the station may determine, based on the location of the primary 80 MHz, the location of the 80 MHz in which the RA-RU is located from the 320 MHz in which the RA-RU is located. For example, if it is assumed that the indication information indicates that the 320 MHz channel division manner is 320-1, and the primary 80 MHz is a first 80 MHz in the four 80 MHz in the ascending order of frequencies in the 320 MHz, the 80 MHz in which the trigger frame is located is the third 80 MHz in FIG. 1. Because the 320 MHz channel division manner is 320-1, the station determines that the RA-RU is in the first 320 MHz corresponding to 320-1. In this case, the primary 80 MHz is the first 80 MHz in FIG. 1. If it is assumed that the station determines that the RA-RU is located in the primary 160 MHz, the first bit of the RU allocation subfield indicates the secondary 80 MHz. In other words, the RA-RU is located in the secondary 80 MHz of the primary 160 MHz. Because the primary 80 MHz is the first 80 MHz in FIG. 1, the primary 160 MHz is the first 160 MHz in FIG. 1. Therefore, the secondary 80 MHz in the primary 160 MHz is the second 80 MHz in FIG. 3. The station determines that the RA-RU is located in the second 80 MHz in FIG. 3. The station determines that the location of the RA-RU in the second 80 MHz in FIG. 3.

Alternatively, the station may not determine, based on the location of the primary 80 MHz, the location of the 80 MHz in which the RA-RU is located from the 320 MHz in which the RA-RU is located. For details, refer to the following descriptions. Details are not described herein again.

In this embodiment of this application, the following manner 1 or manner 2 may be used to indicate that the first user information field is used to allocate the RA-RU to the unassociated EHT STA.

Manner 1: The first user information field includes a first association identifier AID 12 subfield, a value of the first AID 12 subfield is a first value, the first value is a value in 2008-2044, and the first AID 12 subfield indicates that the first user information field is used to allocate the RA-RU to the unassociated EHT STA. 2008-2044 are reserved values of the AID 12 subfield in the 802.11 ax.

The following Table 1 shows values of the AID12 subfield in the 802.11ax and corresponding descriptions. As shown in the following Table 1, when the value of the AID12 subfield is 0, the AID12 subfield indicates that the user information field in which the AID12 subfield is located is used to allocate one RA-RU or a plurality of contiguous RA-RUs to an associated HE STA. When the value of the AID12 subfield is in 1-2007, the AID 12 subfield indicates that the user information field in which the AID12 subfield is located indicates information about an associated STA whose AID is the same as the value of the AID 12 subfield. 2008-2044 are reserved values. When the value of the AID12 subfield is 2045, the AID12 subfield indicates that the user information field in which the AID12 subfield is located is used to allocate one RA-RU or a plurality of contiguous RA-RUs to an unassociated HE STA. When the value of the AID12 subfield is 2046, the AID12 subfield indicates an unallocated RU. Because 2008-2044 are reserved values, in the 802.11be, the value of the AID12 subfield may be set to a value in 2008-2044, to indicate that the user information field is used to allocate the RA-RU to the unassociated EHT STA. The reserved value of the AID 12 subfield in the 802.11ax indicates that the user information field is used to allocate the RA-RU to the unassociated EHT STA, so that the RA-RU can be allocated to the unassociated EHT STA more flexibly.

**Table 1**

| AID 12 subfield | Description |
|---|---|
| 0 | The user information field is used to allocate one RA-RU or a plurality of contiguous RA-RUs to an associated HE STA |
| 1-2007 | The user information field indicates information about an associated HE STA whose AID is the same as the value of the AID 12 subfield |
| 2008-2044 | Reserved values |
| 2045 | The user information field is used to allocate one RA-RU or a plurality of contiguous RA-RUs to an unassociated HE STA |
| 2046 | Unallocated RU |

In a possible implementation, bits of the indication information are located in the first user information field. Specifically, some of or all the bits of the indication information are located in the first user information field. When the bits of the indication information are located in the first user information field, one subfield in the first user information field may carry the bits of the indication information, or a plurality of subfields in the first user information field jointly carry the bits of the indication information.

For example, all the bits of the indication information are located in the first user information field. It is assumed that the indication information has three bits. The three bits of the indication information may be carried in a subfield 1 in the first user information field. Alternatively, the first bit of the indication information is carried in the subfield 1 in the first user information field. The second bit of the indication information is carried in the subfield 2 in the first user information field. The third bit of the indication information is carried in the subfield 3 in the first user information field.

For another example, some of the bits of the indication information are located in the first user information field. It is assumed that the indication information has three bits. Two bits of the indication information may be carried in the subfield 1 in the first user information field. Alternatively, the first bit of the indication information is carried in the subfield 1 in the first user information field. The second bit of the indication information is carried in the subfield 2 in the first user information field. The remaining one bit of the indication information is carried in a field other than the first user information field in the trigger frame.

Optionally, the bits of the indication information are located in the first user information field. The trigger frame further includes a second user information field, the second user information field includes a second modulation and coding scheme MCS subfield, the second MCS subfield includes four bits, and the second user information field indicates information about a non-RA-RU STA. The first user information field includes a first MCS subfield, and a length of the first MCS subfield is less than four bits.

As shown in the Table 1, when a value of an AID12 subfield in the second user information field is a value that is of an AID allocated to a STA and that is in 1-2007, the second user information field indicates the information about the non-RA-RU STA. Because a low MCS is usually used for frames transmitted during random access, an MCS subfield in the first user information subfield does not need to indicate a modulation scheme by using four bits. The MCS subfield in the first user information field only needs to indicate several relatively low MCS modulation schemes. A quantity of bits of the MCS subfield in the first user information subfield may be reduced from four bits to two to three bits. One or more other bits indicates/indicate the channel division information. In this way, the bits of the indication information can be carried in the first user information field without changing a total quantity of bits in the first user information field.

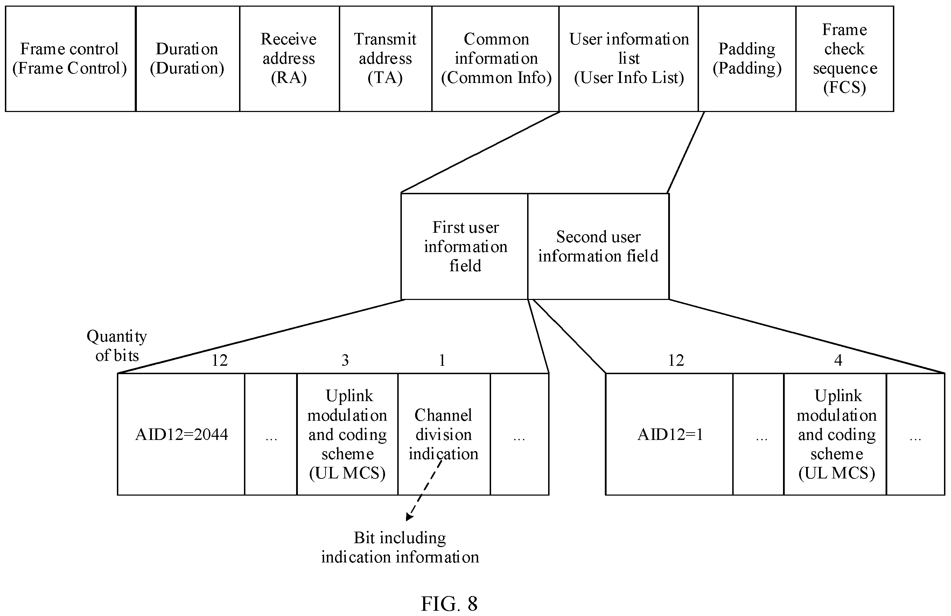

For example, as shown in FIG. 8, the trigger frame includes the first user information field and the second user information field. The value of the AID 12 subfield in the second user information field is 1, which indicates that the second user information field indicates the information about the non-RA-RU STA. The MCS subfield in the second user information field includes four bits. The value of the AID 12 subfield in the first user information field is 2044, which indicates that the first user information field is used to allocate the RA-RU to the unassociated EHT STA. The MCS subfield in the first user information field includes three bits. A channel division indication subfield is a subfield newly added to the first user information field. The channel division indication subfield includes one bit. The channel division indication field includes all or some of the bits of the indication information. When the channel division indication field includes some of the bits of the indication information, the other bits of the indication information may be located in another location of the first user information field, or located in a common information field in the trigger frame or a third user information field described below. The information division indication subfield may be at any location after the AID 12 subfield in the first user information field, and the information division indication subfield may also have another name. This is not limited in this embodiment of this application. A sequence of the first user information field and the second user information field is not limited. The first user information field may be located before or after the second user information field. This is the same in the following.

Optionally, the bits of the indication information are located in the first user information field. The trigger frame further includes a second user information field, the second user information field includes a high efficiency HE/EHT format subfield, and the second user information field indicates information about a non-RA-RU STA. A bit location of the indication information in the first user information field is the same as a bit location of the HE/EHT format subfield in the second user information field.

As shown in Table 1, when a value of an AID 12 subfield in the second user information field is a value that is of an AID allocated to a STA and that is in 1-2007, the second user information field indicates the information about the non-RA-RU STA. The HE/EHT format subfield indicates that the second user information field is an HE STA user information field or an EHT STA user information field. The HE/EHT format subfield includes one bit. The first AID 12 subfield in the first user information field already indicates that the first user information field is a user information field for an EHT STA. Therefore, the HE/EHT format subfield may not be set in the first user information field, and a bit location of an original HE/EHT format subfield is used to carry the indication information. In this way, the bits of the indication information can be carried in the first user information field without changing the total quantity of bits in the first user information field.

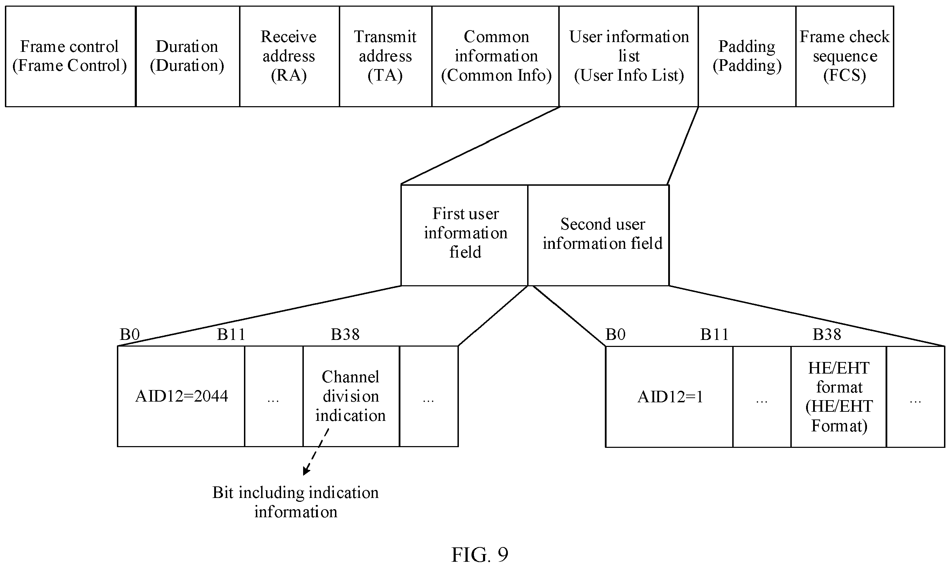

For example, as shown in FIG. 9, the trigger frame includes the first user information field and the second user information field. The value of the AID 12 subfield in the second user information field is 1, which indicates that the second user information field indicates the information about the non-RA-RU STA. The bit location of the HE/EHT format subfield in the second user information field is B38 in the second user information field, in other words, the HE/EHT format subfield is located in the 39^{th} bit in the second user information field. The value of the AID 12 subfield in the first user information field is 2044, which indicates that the first user information field is used to allocate the RA-RU to the unassociated EHT STA. B38 in the first user information field is the channel division indication subfield. The channel division indication subfield is a subfield newly added to the first user information field. The channel division indication subfield includes one bit. The channel division indication field includes all or some of the bits of the indication information. When the channel division indication field includes some of the bits of the indication information, the other bits of the indication information may be located in another location of the first user information field, or located in a common information field in the trigger frame or a third user information field described below. The information division indication subfield may also have another name. This is not limited in this embodiment of this application.

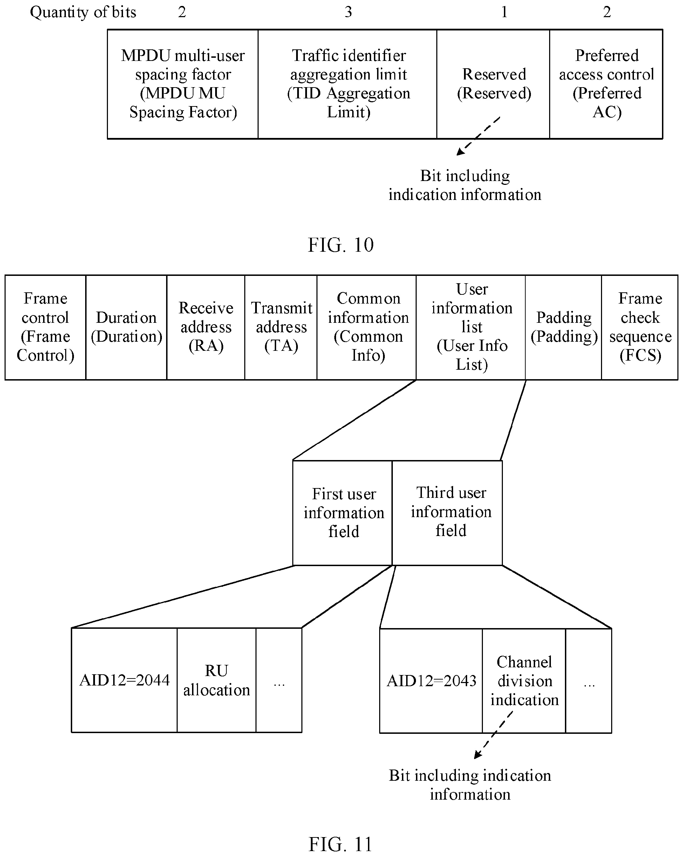

Optionally, the first user information field includes a trigger dependent user information (trigger dependent user info) subfield, and the bits of the indication information are located in the trigger dependent user information field. Specifically, some or all of the bits of the indication information are located in the trigger dependent user information field. Optionally, the bits of the indication information are located in a location of a reserved bit in the trigger dependent user information field. For example, as shown in FIG. 10, in the 802.11 ax standard, the reserved bit in the trigger dependent user information field is in the sixth bit of the trigger dependent user information field, namely, B5 of the trigger dependent user information field. The bits of the indication information may be located in the sixth bit of the trigger dependent user information field.

In a possible implementation, the trigger frame further includes a third user information field, the third user information field includes a second AID 12 field and a first field, a value of the second AID 12 is a second value, the second AID 12 field indicates that bits of the indication information are located in the first field, the second value is a value in 2008-2044 or the second value is a value that is of the AID12 not allocated to the associated STA and that is in 1-2007, and the second value is different from the first value. All or some of the bits of the indication information are located in the first field. The first field may be referred to as a channel division indication subfield or may have another name.

For example, the first field is the channel division indication subfield. As shown in FIG. 11, the trigger frame includes the first user information field and the third user information field. The value of the AID 12 subfield in the third user information field is 2043, which indicates that the channel division indication subfield following the AID12 subfield carries the bits of the indication information. The value of the AID12 subfield in the first user information field is 2044, which indicates that the first user information field is used to allocate the RA-RU to the unassociated EHT STA. That is, in this possible implementation, a special user information field is used to carry the bits of the indication information. In this way, design of the first user information field for the unassociated EHT STA does not need to be complex, and interpretation of the first user information field by a receive end is simplified. A sequence of the first user information field and the third user information field is not limited. The first user information field may be located before or after the third user information field. This is the same in the following.

In a possible implementation, the trigger frame further includes a common information field, and the bits of the indication information are located in the common information field. Specifically, all or some of the bits of the indication information are located in the common information field. Advantages of carrying the bits of the indication information in the common information field are that there are a relatively large quantity of reserved bits in the common information field, design of the first user information field for the unassociated EHT STA does not need to be complex, and interpretation of the first user information field by the receive end can be simplified.

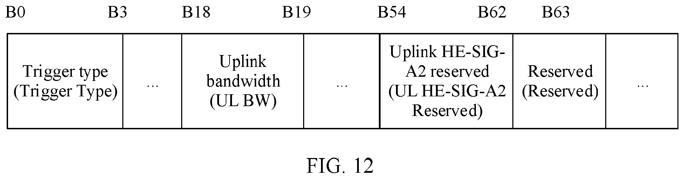

Optionally, the bits of the indication information are located in a location of a reserved bit in the common information field. For example, as shown in FIG. 12, in the 802.11ax standard, the location of the reserved bit in the common information field is the 55^{th} bit to the 64^{th} bit (namely, B54 to B63) in the common information field. The bits of the indication information may be located between the 55^{th} bit and the 64^{th} bit in the common information field.

Optionally, the bits of the indication information are located in an uplink bandwidth (UL BW) subfield in the common information field. For example, two entries used to indicate 320-1 and 320-2 other than the 20/40/80/160 MHz bandwidth may be added to the UL BW subfield. In this way, the UL BW subfield indicates the 320 MHz channel division manner.

In a possible implementation, the channel division information includes the 320 MHz channel division manner. The first user information field further includes a resource unit allocation (RU allocation) subfield and a low/high 160 MHz subfield. The low/high 160 MHz subfield indicates a low 160 MHz or a high 160 MHz, and a first bit of the resource unit allocation subfield indicates a low 80 MHz or a high 80 MHz in the 160 MHz indicated by the low/high 160 MHz subfield.

In this possible implementation, the low/high 160 MHz subfield indicates, based on an absolute frequency, that the RA-RU is located in a low frequency 160 MHz or a high frequency 160 MHz in the 320 MHz bandwidth. The first bit in the resource unit allocation subfield also indicates, based on the absolute frequency, that the RA-RU is located in the low frequency 80 MHz or the high frequency 80 MHz in the 160 MHz. In this way, the station only needs to determine, based on the 320 MHz channel division manner, the 320 MHz in which the RA-RU is located, and can determine the 80 MHz in which the RA-RU is located without knowing a location of a primary 80 MHz, to determine the location of the RA-RU. In other words, in this manner, the indication information does not need to indicate the location of the primary 80 MHz, and indication signaling overheads are reduced.

For example, if it is assumed that the indication information indicates that the 320 MHz channel division manner is 320-1, the 80 MHz in which the trigger frame is located is the third 80 MHz in FIG. 1. Because the 320 MHz channel division manner is 320-1, the station determines that the RA-RU is in the first 320 MHz corresponding to 320-1. The low/high 160 MHz subfield indicates a high-frequency 160 MHz, and the first bit of the RU allocation subfield indicates a low-frequency 80 MHz. Therefore, the RA-RU is located in a low-frequency 80 MHz of a high-frequency 160 MHz in the first 320 MHz corresponding to 320-1 in FIG. 1. Frequencies of channels in FIG. 1 increase sequentially from left to right. Therefore, the RA-RU is located in the third 80 MHz in FIG. 1.

In a possible implementation, the trigger frame may include only the first user information field; or include the first user information field and the second user information field; or include the first user information field and the third user information field; or include the first user information field, the second user information field, and the third user information field.

Manner 2: The first user information field includes a first association identifier AID12 subfield, a value of the first AID 12 subfield is 2045, and the first AID 12 subfield indicates that the first user information field is used to allocate the RA-RU to the unassociated EHT STA.

It can be learned from Table 1 that, in the 802.11 ax, when the value of the AID12 subfield is 2045, it indicates that the user information field in which the AID12 subfield is located is used to allocate the RA-RU to the unassociated HE STA. That is, in Manner 2, when the value of the AID12 subfield in the first user information field is 2045, the first user information field allocates RA-RUs to both the unassociated HE STA and the unassociated EHT STA. In this case, random access can be performed only on a primary 160 MHz channel that is also supported by an HE STA. An advantage is that there is no need to additionally design a user information field for UORA of the EHT STA.

In a possible implementation, the trigger frame further includes a common information field, the first user information field includes a trigger dependent user information subfield, the indication information includes a plurality of bits, and the bits of the indication information are located in one or more of the following locations: the common information field, a location of a reserved bit in the first user information field, or a location of a reserved bit in the trigger dependent user information subfield.

For example, the first part of the bits of the indication information is located in the common information field, and the second part of the bits of the indication information is located in the location of the reserved bit in the first user information field. For another example, the first part of the bits of the indication information is located in the common information field, the second part of the bits of the indication information is located in the location of the reserved bit in the first user information field, and the third part of the bits of the indication information is located in the location of the reserved bit in the trigger dependent user information subfield. The location of the reserved bit in the first user information field is the 40^{th} bit (B39) in the first user information field. The location of the reserved bit in the trigger dependent user information subfield is the sixth bit (B5) of the trigger dependent user information subfield.

Optionally, the first part of the bits of the indication information may be located in the location of the reserved bit in the common information field. As shown in FIG. 12, the location of the reserved bit in the common information field is the 55^{th} bit to the 64^{th} bit (namely, B54 to B63) in the common information field. Alternatively, the first part of the bits of the indication information is located in a UL BW subfield in the common information field. For example, two entries used to indicate 320-1 and 320-2 other than the 20/40/80/160 MHz bandwidth may be added to the UL BW subfield. In this way, the UL BW subfield indicates the 320 MHz channel division manner.

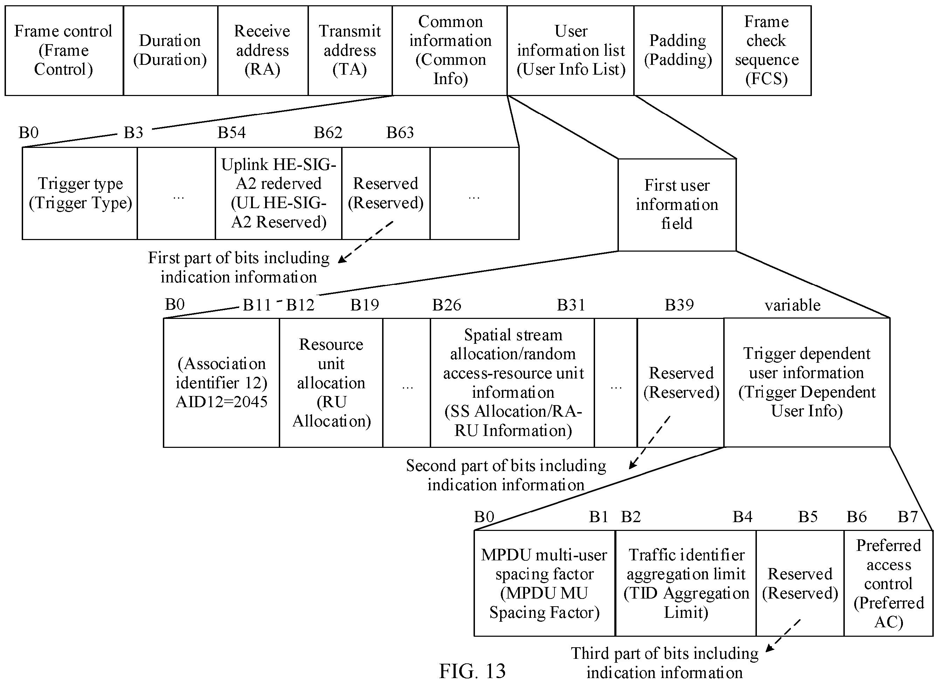

For example, it is assumed that the indication information has three bits. The first part of the bits of the indication information includes one bit, and is used to indicate the 320 MHz channel division manner. The second part of the bits of the indication information includes one bit, the third part of the bits includes one bit, and the second part of the bits and the third part of the bits are jointly used to indicate the location of the primary 80 MHz. For how to indicate the location of the primary 80 MHz by using two bits, refer to the foregoing descriptions. Details are not described herein again. As shown in FIG. 13, the first part of the bits of the indication information is located in the 64^{th} bit (B63) of the common information field. The second part of the bits of the indication information is located in the 40^{th} bit (B39) of the common information field. The third part of the bits of the indication information is located in the 6^{th} bit (B5) of the trigger dependent user information field.

In a possible implementation, the trigger frame further includes a third user information field, the third user information field includes a second AID 12 field and a first field, a value of the second AID 12 is a second value, the second AID 12 field indicates that the bits of the indication information are located in the first field, and the second value is a value in 2008-2044 or the second value is a value that is of an AID12 not allocated to an associated STA and that is in 1-2007. All or some of the bits of the indication information are located in the first field. The first field may be referred to as a channel division indication subfield or may have another name.

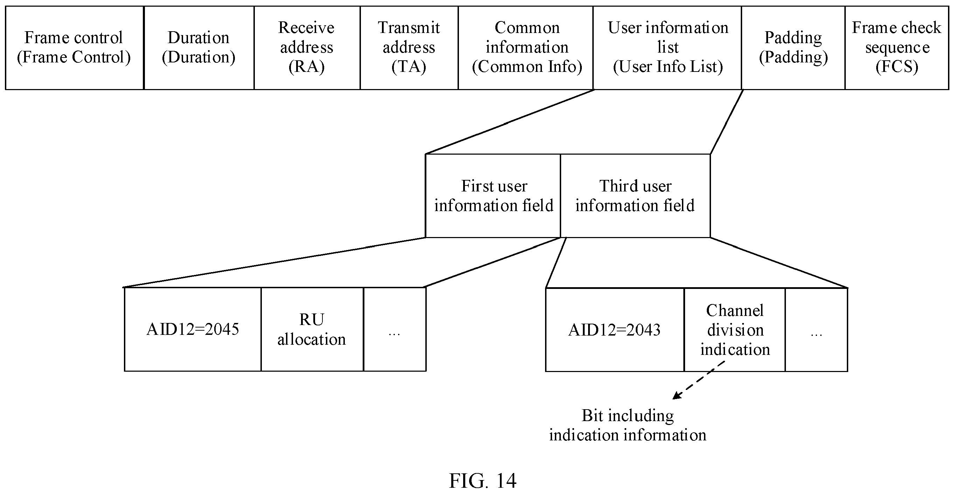

For example, the first field is a channel division indication subfield. As shown in FIG. 14, the trigger frame includes the first user information field and the third user information field. The value of the AID 12 subfield in the third user information field is 2043, which indicates that the channel division indication subfield following the AID12 subfield carries the bits of the indication information. The value of the AID12 subfield in the first user information field is 2045, which indicates that the first user information field is used to allocate the RA-RU to the unassociated EHT STA. That is, in this possible implementation, a special user information field is used to carry the bits of the indication information. In this way, design of the first user information field for the unassociated EHT STA does not need to be complex, and interpretation of the first user information field by a receive end is simplified.

In a possible implementation, the trigger frame further includes a common information field, and the bits of the indication information are located in the common information field. Specifically, all or some of the bits of the indication information are located in the common information field. The bits of the indication information are carried in the common information field. In this way, design of the first user information field for the unassociated EHT STA does not need to be complex, and interpretation of the first user information field by the receive end is simplified.

Optionally, the bits of the indication information are located in the location of the reserved bit in the common information field. For example, as shown in FIG. 12, the location of the reserved bit in the common information field is the 55^{th} bit to the 64^{th} bit (namely, B54 to B63) in the common information field. The bits of the indication information may be located between the 55^{th} bit and the 64^{th} bit in the common information field.

Optionally, the bits of the indication information are located in the UL BW subfield in the common information field. For example, two entries used to indicate 320-1 and 320-2 other than the 20/40/80/160 MHz bandwidth may be added to the UL BW subfield. In this way, the UL BW subfield indicates the 320 MHz channel division manner.

In a possible implementation, to enable the unassociated EHT STA to obtain the channel division information, each STA may be forced to obtain the channel division indication by using a beacon frame (beacon frame) or a probe response frame (probe response frame) before performing UORA.

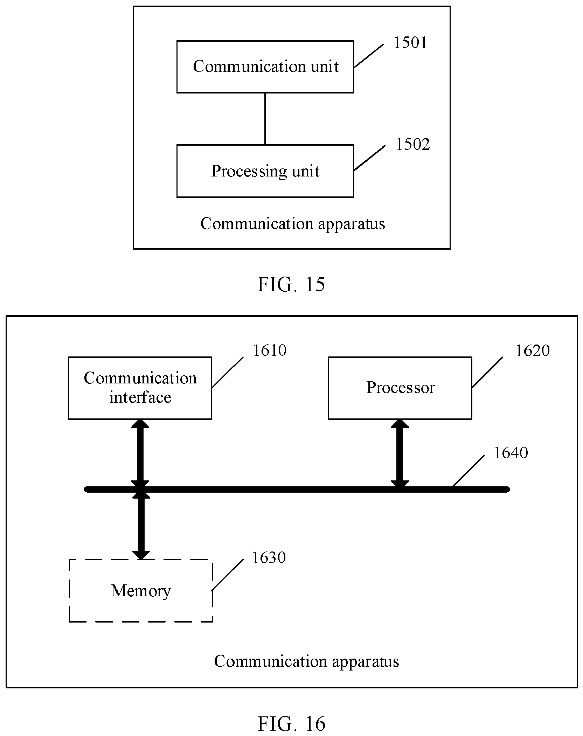

FIG. 15 is a schematic diagram of a structure of a communication apparatus according to an embodiment of this application. The communication apparatus shown in FIG. 15 may be configured to execute some or all functions of the access point in the method embodiment described in FIG. 6. The apparatus may be an access point, an apparatus in an access point, or an apparatus that can be used together with an access point. The communication apparatus may alternatively be a chip system. The communication apparatus shown in FIG. 15 may include a communication unit 1501 and a processing unit 1502. The processing unit 1502 is configured to perform data processing. A receive unit and a transmit unit are integrated into the communication unit 1501. The communication unit 1501 may also be referred to as a transceiver unit. Alternatively, the communication unit 1501 may be split into a receive unit and a transmit unit. The processing unit 1502 and the communication unit 1501 below are similar, and details are not described below again.

The processing unit 1502 is configured to generate a trigger frame, where the trigger frame includes a first user information field, the first user information field is used to allocate a random access-resource unit RA-RU to an unassociated extremely high-throughput station EHT STA, and the trigger frame carries indication information that indicates channel division information. The communication unit 1501 is configured to send the trigger frame to a station.

In a possible implementation, the first user information field includes a first association identifier AID 12 subfield, a value of the first AID 12 subfield is a first value, the first value is a value in 2008-2044 or the first value is a value that is of an AID12 not allocated to an associated STA and that is in 1-2007, and the first AID12 subfield indicates that the first user information field is used to allocate the RA-RU to the unassociated EHT STA.

In a possible implementation, bits of the indication information are located in the first user information field.

In a possible implementation, the trigger frame further includes a second user information field, the second user information field includes a second modulation and coding scheme MCS subfield, the second MCS subfield includes four bits, and the second user information field indicates information about a non-RA-RU STA. The first user information field includes a first MCS subfield, and a length of the first MCS subfield is less than four bits.

In a possible implementation, the trigger frame further includes a second user information field, the second user information field includes a high efficiency HE/EHT format subfield, and the second user information field indicates information about a non-RA-RU STA. A bit location of the indication information in the first user information field is the same as a bit location of the HE/EHT format subfield in the second user information field.

In a possible implementation, the first user information field includes a trigger dependent user information subfield, and the bits of the indication information are located in the trigger dependent user information field.

In a possible implementation, the trigger frame further includes a third user information field, the third user information field includes a second AID12 field and a first field, a value of the second AID12 is a second value, the second AID12 field indicates that bits of the indication information are located in the first field, the second value is a value in 2008-2044 or the second value is a value that is of the AID12 not allocated to the associated STA and that is in 1-2007, and the second value is different from the first value.

In a possible implementation, the channel division information includes a 320 megahertz MHz channel division manner, the first user information field further includes a resource unit allocation subfield and a low/high 160 MHz subfield, the low/high 160 MHz subfield indicates that the RA-RU is located in a low 160 MHz or a high 160 MHz, and a first bit of the resource unit allocation subfield indicates a low 80 MHz or a high 80 MHz of the 160 MHz indicated by the low/high 160 MHz subfield.

In a possible implementation, the first user information field includes a first association identifier AID 12 subfield, a value of the first AID12 subfield is 2045, and the first AID12 subfield indicates that the first user information field is used to allocate the RA-RU to the unassociated EHT STA.

In a possible implementation, the trigger frame further includes a common information field, the first user information field includes a trigger dependent user information subfield, the indication information includes a plurality of bits, and the bits of the indication information are located in one or more of the following locations: the common information field, a location of a reserved bit in the first user information field, or a location of a reserved bit in the trigger dependent user information subfield.

In a possible implementation, the trigger frame further includes a third user information field, the third user information field includes a second AID 12 field and a first field, a value of the second AID 12 is a second value, the second AID 12 field indicates that the bits of the indication information are located in the first field, and the second value is a value in 2008-2044 or the second value is a value that is of an AID12 not allocated to an associated STA and that is in 1-2007.

In a possible implementation, the trigger frame further includes a common information field, and bits of the indication information are located in the common information field.

In a possible implementation, the channel division information includes one or more pieces of the following information: the 320 megahertz MHz channel division manner and a location of a primary 80 MHz.

FIG. 15 is a schematic diagram of a structure of a communication apparatus according to an embodiment of this application. The communication apparatus shown in FIG. 15 may be configured to execute some or all functions of the station in the method embodiment described in FIG. 6. The apparatus may be a station, an apparatus in a station, or an apparatus that can be used together with a station. The communication apparatus may alternatively be a chip system. The communication apparatus shown in FIG. 15 may include a communication unit 1501 and a processing unit 1502.

The communication unit 1501 is configured to receive a trigger frame sent by an access point, where the trigger frame includes a first user information field, the first user information field is used to allocate a random access-resource unit RA-RU to an unassociated extremely high-throughput station EHT STA, and the trigger frame carries indication information that indicates channel division information. The processing unit 1502 is configured to read the channel division information in the trigger frame.

In a possible implementation, the first user information field further includes a resource unit RU allocation subfield, and the RU allocation subfield is used to allocate the RA-RU. The processing unit 1502 is further configured to read a location of the RA-RU based on the channel division information and the RU allocation subfield. The communication unit 1501 is further configured to perform random access transmission based on the location of the RA-RU.

For a possible implementation, refer to the foregoing possible implementation of the communication apparatus. Details are not described herein again.

FIG. 16 shows a communication apparatus 160 according to an embodiment of this application. The communication apparatus 160 is configured to implement a function of the access point in FIG. 6. The apparatus may be an access point or an apparatus used for an access point. The apparatus used for the access point may be a chip system or a chip in the access point. The chip system may include a chip, or may include a chip and another discrete device.

Alternatively, the communication apparatus 160 is configured to implement a function of the station in FIG. 6. The apparatus may be a station or an apparatus used for a station. The apparatus used for the station may be a chip system or a chip in the station.

The communication apparatus 160 includes at least one processor 1620, configured to implement a data processing function of the access point or the station in the method provided in embodiments of this application. The apparatus 160 may further include a communication interface 1610, configured to implement receiving and sending operations of the access point or the station in the method provided in embodiment of this application. In this embodiment of this application, the communication interface may be a transceiver, a circuit, a bus, a module, or another type of communication interface; and is configured to communicate with another device through a transmission medium. For example, the communication interface 1610 is used by an apparatus in the apparatus 160 to communicate with another device. The processor 1620 receives and sends data through the communication interface 1610, and is configured to implement the method in FIG. 6 in the foregoing method embodiment.

The apparatus 160 may further include at least one memory 1630, configured to store program instructions and/or data. The memory 1630 is coupled to the processor 1620. Coupling in embodiments of this application may be indirect coupling or a communication connection between apparatuses, units, or modules in an electrical form, a mechanical form, or another form; and is used for information exchange between the apparatuses, the units, or the modules. The processor 1620 may operate cooperatively with the memory 1630. The processor 1620 may execute the program instructions stored in the memory 1630. At least one of the at least one memory may be included in the processor

A specific connection medium between the communication interface 1610, the processor 1620, and the memory 1630 is not limited in this embodiment of this application. In this embodiment of this application, the memory 1630, the processor 1620, and the communication interface 1610 are connected through a bus 1640 in FIG. 16. The bus is represented by using a bold line in FIG. 16. A manner of connection between other components is merely an example for description, and is not limited thereto. The bus may be classified into an address bus, a data bus, a control bus, and or the like. For ease of representation, only one bold line is used for representation in FIG. 16, but this does not mean that there is only one bus or only one type of bus.

When the apparatus 160 is specifically an apparatus used in the access point or the station, for example, when the apparatus 160 is specifically a chip or a chip system, the communication interface 1610 may output or receive a baseband signal. When the apparatus 160 is specifically the access point or the station, the communication interface 1610 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component; and may implement or execute the methods, operations, and logical block diagrams disclosed in embodiments of this application. The general-purpose processor may be a microprocessor, any conventional processor, or the like. The operations of the method disclosed with reference to embodiments of this application may be directly performed by a hardware processor, or may be performed by using a combination of hardware in the processor and a software module.

An embodiment of this application further provides a computer-readable storage medium. The computer-readable storage medium stores instructions. When the instructions are run on the processor, the method procedures in the foregoing method embodiments are implemented.

An embodiment of this application further provides a computer program product. When the computer program product runs on the processor, the method procedures in the foregoing method embodiments are implemented.

It should be noted that, for brief description, the foregoing method embodiments are represented as a series of actions. However, persons skilled in the art should appreciate that this application is not limited to the described order of the actions, because according to this application, some operations may be performed in other orders or simultaneously. It should be further appreciated by persons skilled in the art that embodiments described in this specification all belong to example embodiments, and the involved actions and modules are not necessarily required by this application.

Cross reference may be made to descriptions of embodiments provided in this application, and the descriptions of embodiments have different focuses. For a part not described in detail in an embodiment, refer to related descriptions of another embodiment. For ease of description and brevity, for functions of the apparatuses and devices provided in embodiments of this application and operations performed by the apparatuses and devices, refer to related descriptions of the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A channel division information indication method, comprising:
generating, by an access point, a trigger frame, wherein the trigger frame comprises a first user information field, the first user information field is used to allocate a random access-resource unit RA-RU to an unassociated extremely high-throughput station EHT STA, and the trigger frame carries indication information that indicates channel division information; and
sending, by the access point, the trigger frame to a station.

2. A channel division information indication method, comprising:
receiving, by a station, a trigger frame sent by an access point, wherein the trigger frame comprises a first user information field, the first user information field is used to allocate a random access-resource unit RA-RU to an unassociated extremely high-throughput station EHT STA, and the trigger frame carries indication information that indicates channel division information; and
reading, by the station, the channel division information in the trigger frame.

3. The method according to claim 2, wherein the first user information field further comprises a resource unit RU allocation subfield, and the RU allocation subfield is used to allocate the RA-RU; and the method further comprises:
reading, by the station, a location of the RA-RU based on the channel division information and the RU allocation subfield; and
performing, by the station, random access transmission based on the location of the RA-RU.

4. The method according to any one of claims 1 to 3, wherein the first user information field comprises a first association identifier AID 12 subfield, a value of the first AID 12 subfield is a first value, the first value is a value in 2008-2044 or the first value is a value that is of an AID12 not allocated to an associated STA and that is in 1-2007, and the first AID12 subfield indicates that the first user information field is used to allocate the RA-RU to the unassociated EHT STA.

5. The method according to claim 4, wherein bits of the indication information are located in the first user information field.

6. The method according to claim 5, wherein the trigger frame further comprises a second user information field, the second user information field comprises a second modulation and coding scheme MCS subfield, the second MCS subfield comprises four bits, and the second user information field indicates information about a non-RA-RU STA; and the first user information field comprises a first MCS subfield, and a length of the first MCS subfield is less than four bits.

7. The method according to claim 5, wherein the trigger frame further comprises a second user information field, the second user information field comprises a high efficiency HE/EHT format subfield, and the second user information field indicates information about a non-RA-RU STA; and a bit location of the indication information in the first user information field is the same as a bit location of the HE/EHT format subfield in the second user information field.

8. The method according to claim 5, wherein the first user information field comprises a trigger dependent user information subfield, and the bits of the indication information are located in the trigger dependent user information field.

9. The method according to claim 4, wherein the trigger frame further comprises a third user information field, the third user information field comprises a second AID 12 field and a first field, a value of the second AID 12 is a second value, the second AID 12 field indicates that bits of the indication information are located in the first field, the second value is a value in 2008-2044 or the second value is a value that is of the AID 12 not allocated to the associated STA and that is in 1-2007, and the second value is different from the first value.

10. The method according to any one of claims 4 to 9, wherein the channel division information comprises a 320 megahertz MHz channel division manner, the first user information field further comprises a resource unit allocation subfield and a low/high 160 MHz subfield, the low/high 160 MHz subfield indicates that the RA-RU is located in a low 160 MHz or a high 160 MHz, and a first bit of the resource unit allocation subfield indicates a low 80 MHz or a high 80 MHz of the 160 MHz indicated by the low/high 160 MHz subfield.

11. The method according to any one of claims 1 to 3, wherein the first user information field comprises a first association identifier AID 12 subfield, a value of the first AID 12 subfield is 2045, and the first AID 12 subfield indicates that the first user information field is used to allocate the RA-RU to the unassociated EHT STA.

12. The method according to claim 11, wherein the trigger frame further comprises a common information field, the first user information field comprises a trigger dependent user information subfield, the indication information comprises a plurality of bits, and the bits of the indication information are located in one or more of the following locations: the common information field, a location of a reserved bit in the first user information field, or a location of a reserved bit in the trigger dependent user information subfield.

13. The method according to claim 11, wherein the trigger frame further comprises a third user information field, the third user information field comprises a second AID 12 field and a first field, a value of the second AID 12 is a second value, the second AID 12 field indicates that the bits of the indication information are located in the first field, and the second value is a value in 2008-2044 or the second value is a value that is of an AID12 not allocated to an associated STA and that is in 1-2007.

14. The method according to claim 4 or 11, wherein the trigger frame further comprises a common information field, and bits of the indication information are located in the common information field.

15. The method according to any one of claims 1 to 9 or any one of claims 11 to 14, wherein the channel division information comprises one or more pieces of the following information: the 320 megahertz MHz channel division manner and a location of a primary 80 MHz.

16. A communication apparatus, comprising:
a processing unit, configured to generate a trigger frame, wherein the trigger frame comprises a first user information field, the first user information field is used to allocate a random access-resource unit RA-RU to an unassociated extremely high-throughput station EHT STA, and the trigger frame carries indication information that indicates channel division information; and
a communication unit, configured to send the trigger frame to a station.

17. A communication apparatus, comprising:
a communication unit, configured to receive a trigger frame sent by an access point, wherein the trigger frame comprises a first user information field, the first user information field is used to allocate a random access-resource unit RA-RU to an unassociated extremely high-throughput station EHT STA, and the trigger frame carries indication information that indicates channel division information; and
a processing unit, configured to read the channel division information in the trigger frame.

18. The apparatus according to claim 17, wherein the first user information field further comprises a resource unit RU allocation subfield, and the RU allocation subfield is used to allocate the RA-RU;
the processing unit is further configured to read a location of the RA-RU based on the channel division information and the RU allocation subfield; and
the communication unit is further configured to perform random access transmission based on the location of the RA-RU.

19. The apparatus according to any one of claims 16 to 18, wherein the first user information field comprises a first association identifier AID 12 subfield, a value of the first AID 12 subfield is a first value, the first value is a value in 2008-2044 or the first value is a value that is of an AID 12 not allocated to an associated STA and that is in 1-2007, and the first AID12 subfield indicates that the first user information field is used to allocate the RA-RU to the unassociated EHT STA.

20. The apparatus according to claim 19, wherein bits of the indication information are located in the first user information field.

21. The apparatus according to claim 20, wherein the trigger frame further comprises a second user information field, the second user information field comprises a second modulation and coding scheme MCS subfield, the second MCS subfield comprises four bits, and the second user information field indicates information about a non-RA-RU STA; and the first user information field comprises a first MCS subfield, and a length of the first MCS subfield is less than four bits.

22. The apparatus according to claim 20, wherein the trigger frame further comprises a second user information field, the second user information field comprises a high efficiency HE/EHT format subfield, and the second user information field indicates information about a non-RA-RU STA; and a bit location of the indication information in the first user information field is the same as a bit location of the HE/EHT format subfield in the second user information field.

23. The apparatus according to claim 20, wherein the first user information field comprises a trigger dependent user information subfield, and the bits of the indication information are located in the trigger dependent user information field.

24. The apparatus according to claim 19, wherein the trigger frame further comprises a third user information field, the third user information field comprises a second AID 12 field and a first field, a value of the second AID 12 is a second value, the second AID12 field indicates that bits of the indication information are located in the first field, the second value is a value in 2008-2044 or the second value is a value that is of the AID 12 not allocated to the associated STA and that is in 1-2007, and the second value is different from the first value.

25. The apparatus according to any one of claims 19 to 24, wherein the channel division information comprises a 320 megahertz MHz channel division manner, the first user information field further comprises a resource unit allocation subfield and a low/high 160 MHz subfield, the low/high 160 MHz subfield indicates that the RA-RU is located in a low 160 MHz or a high 160 MHz, and a first bit of the resource unit allocation subfield indicates a low 80 MHz or a high 80 MHz of the 160 MHz indicated by the low/high 160 MHz subfield.

26. The apparatus according to any one of claims 16 to 18, wherein the first user information field comprises a first association identifier AID 12 subfield, a value of the first AID 12 subfield is 2045, and the first AID 12 subfield indicates that the first user information field is used to allocate the RA-RU to the unassociated EHT STA.

27. The apparatus according to claim 26, wherein the trigger frame further comprises a common information field, the first user information field comprises a trigger dependent user information subfield, the indication information comprises a plurality of bits, and the bits of the indication information are located in one or more of the following locations: the common information field, a location of a reserved bit in the first user information field, or a location of a reserved bit in the trigger dependent user information subfield.

28. The apparatus according to claim 26, wherein the trigger frame further comprises a third user information field, the third user information field comprises a second AID 12 field and a first field, a value of the second AID 12 is a second value, the second AID 12 field indicates that the bits of the indication information are located in the first field, and the second value is a value in 2008-2044 or the second value is a value that is of an AID12 not allocated to an associated STA and that is in 1-2007.

29. The apparatus according to claim 19 or 26, wherein the trigger frame further comprises a common information field, and bits of the indication information are located in the common information field.

30. The apparatus according to any one of claims 16 to 24 or any one of claims 26 to 29, wherein the channel division information comprises one or more pieces of the following information: the 320 megahertz MHz channel division manner and a location of a primary 80 MHz.

31. A communication apparatus, comprising a processor and a communication interface, wherein
the communication interface is configured to communicate with another communication apparatus; and the processor is configured to run a program, so that the communication apparatus implements the method according to any one of claims 1 to 15.

32. A computer-readable storage medium, wherein the computer-readable storage medium stores computer-executable instructions; and when the computer-executable instructions are invoked by a computer, the computer is enabled to perform the method according to any one of claims 1 to 15.

33. A computer program product, wherein the computer program product comprises computer program code; and when the computer program code is run by a computer, the computer is enabled to perform the method according to any one of claims 1 to 15.
